# FASCICULE DE BREVET EUROPEEN

(11) **EP 0 459 904 B1**
(45) Date de publication et mention de la délivrance du brevet: **31.08.1994**
(21) Numéro de dépôt: 91401404.8
(22) Date de dépôt: 30.05.1991
(51) Int. Cl.: H02G 3/26, F16L 3/22

(54) **Ensemble modulaire de support de câbles électriques**
Modularer Zusammenbau zum Tragen von elektrischen Kabeln
Modular assembly for holding electric cables

(30) Priorité: 01.06.1990 FR 9006850
(43) Date de publication de la demande: 04.12.1991
(73) Titulaire: DASSAULT-AVIATION, F-75008 Paris (FR)
(72) Inventeur: Milcent, Bernard, F-78650 Beynes (FR); Le Cunff, Jean-Marie, F-92210 Saint Cloud (FR)
(74) Mandataire: Colas, Jean-Pierre

(56) Documents cités:
- EP-A- 0 054 478
- AU-B- 516 939
- US-A- 4 771 743

## Description

La présente invention est relative à un ensemble de support de câbles et, plus particulièrement, à un tel ensemble modulaire destiné à supporter des câbles électriques dans un aéronef.

Les aéronefs modernes sont équipés de nombreux appareils à alimentation et commande électriques connectés à des câbles qui courent sur des cloisons ou parois internes de la cellule. La longueur cumulée de ces câbles se mesure en kilomètres. Ils sont souvent rassemblés en faisceaux maintenus assemblés par des sangles passant dans des berceaux eux-mêmes solidaires de supports fixés sur ces cloisons ou parois. Un exemple de tels supports de câbles pour aéronef est décrit dans le document EP-A-0054478

On utilise actuellement, à l'intérieur d'un même aéronef, de nombreux modèles de tels supports ou berceaux, de manière à couvrir toutes les orientations et distances possibles des faisceaux de câbles vis-à-vis des parois de support. Il faut alors disposer d'une large gamme d'étriers et de supports droits, doubles, d'angle, etc... dont la fabrication et le stockage sont coûteux du fait même de leur diversité. Malgré cela, chaque support étant destiné à répondre à une seule situation, cette gamme ne peut prétendre, malgré son étendue, s'adapter à toutes les situations rencontrées, qui varient à l'infini.

La présente invention a pour but de réaliser un ensemble de support de câbles qui permet de constituer, à partir d'un petit nombre d'éléments, une grande variété de supports adaptables à toutes les situations que l'on peut rencontrer dans la cellule d'un aéronef, quant à l'orientation des faisceaux de câbles, leur distance vis-à-vis des cloisons ou parois de support, etc...

La présente invention a aussi pour but de réaliser un tel ensemble qui autorise un gain en masse important, avantage qui est essentiel sur un aéronef moderne.

La présente invention a encore pour but de réaliser un tel ensemble qui procure un gain financier, tant en ce qui concerne son coût de fabrication que son coût de stockage.

On atteint ces buts de l'invention, ainsi que d'autres qui apparaîtront dans la suite de la présente description, avec un ensemble modulaire de support de câbles électriques comprenant au moins deux éléments constituant respectivement une embase prévue pour être fixée sur une surface de support et une tête conformée pour recevoir les câbles, un téton solidaire d'un élément étant conformé pour être reçu dans une douille solidaire de l'autre élément de manière à assurer l'assemblage des deux éléments, ensemble caractérisé en ce que le téton présente successivement, à partir de sa racine, une nervure annulaire et une surface latérale dentée coaxiales et en ce que la douille présente successivement, à partir de son débouché, une gorge annulaire et une surface latérale interne dentée coaxiales et conformées complémentairement à la nervure et à la surface latérale dentée, du téton pour permettre l'insertion du téton dans la douille suivant une orientation angulaire relative choisie parmi celles définies par les surfaces dentées coopérantes, et l'insertion à force de la nervure dans la gorge pour bloquer axialement le téton dans la douille.

Suivant un mode de réalisation préféré de l'invention, on utilise un jeu d'embases, un jeu de têtes et des éléments intermédiaires adapteurs tels que colonnettes d'extension ou croisillons. Toutes ces pièces sont assemblables entre elles grâce à la compatibilité de tous les tétons et de toutes les douilles formés sur elles. On peut ainsi constituer un grand nombre d'ensembles de support différents à l'aide d'un petit nombre de pièces distinctes qui donnent à ces ensembles un caractère modulaire.

D'autres caractéristiques et avantages de la présente invention apparaîtront à la lecture de la description qui va suivre et à l'examen du dessin annexé, dans lequel :
- les figures 1 à 3 représentent un premier mode de réalisation d'une embase généralement triangulaire conçue pour faire partie de l'ensemble de support suivant l'invention,
- les figures 4, 5 et 6 représentent une tête conçue pour servir de berceau à un câble ou à un faisceau de câbles, cette tête pouvant être fixée par exemple sur l'embase des figures 1 à 3,
- la figure 7 représente un mode de réalisation d'un ensemble de support suivant l'invention composé de l'embase des figures 1 à 3 et de la tête des figures 4 à 6 en position d'assemblage, la tête recevant un faisceau de câbles à maintenir dans une position prédéterminée par rapport à une surface sur laquelle est fixée l'embase,
- les figures 8 et 9 représentent un deuxième mode de réalisation d'une embase généralement triangulaire conçue pour faire partie d'un ensemble suivant l'invention,
- les figures 10 et 11 représentent un premier mode de réalisation d'une embase généralement rectangulaire incorporable à un ensemble de support suivant l'invention,
- les figures 12 et 13 représentent un deuxième mode de réalisation d'une embase généralement rectangulaire incorporable à l'ensemble suivant la présente invention,
- la figure 14 représente une colonnette d'extension conçue pour faire partie de l'ensemble suivant la présente invention, et
- la figure 15 représente un croisillon conçu pour permettre la fixation sur une même embase de plusieurs câbles ou faisceaux de câbles.

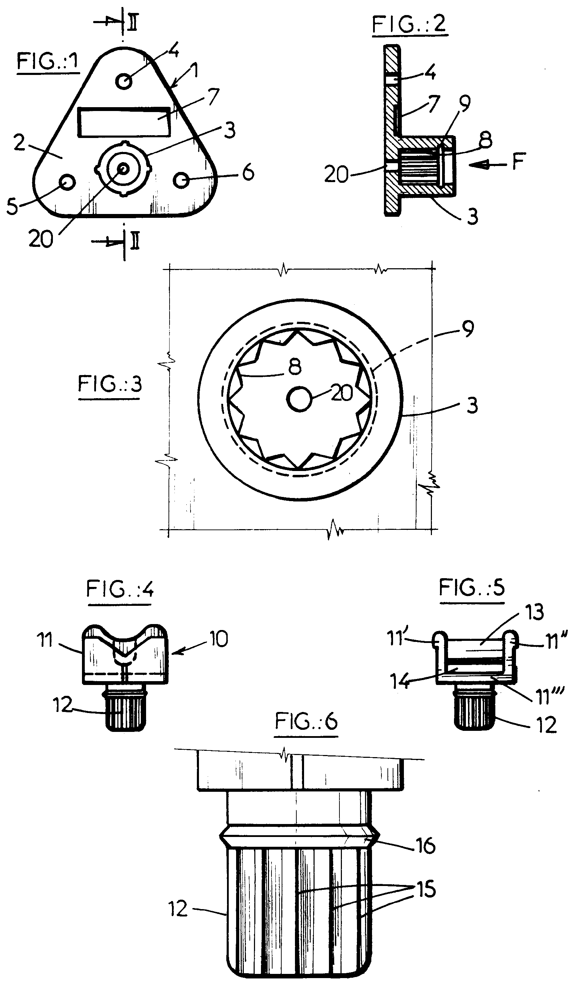

On se réfère aux figures 1 à 3 du dessin annexé où l'on a représenté à la figure 1 une vue en élévation d'une embase 1 conçue pour être fixée sur la surface d'une cloison, paroi, ou autre élément de structure d'un aéronef par exemple. Cette embase comprend une base plane généralement triangulaire 2 et une douille 3 débordant perpendiculairement du plan de la base 2. Trois trous 4, 5, 6 sont percés dans la partie plane 2 pour permettre le passage d'organes tels que vis, rivets etc... permettant la fixation de l'embase sur une surface plane. La face de la base plane 2 de laquelle déborde la douille 3 présente encore un léger enfoncement rectangulaire 7 propre à recevoir des inscriptions, éventuellement sur étiquette, permettant par exemple l'identification des câbles supportés par l'embase.

La figure 2 est une coupe suivant le trait de coupe II-II de la figure 1, de la douille équipant l'embase. La figure 3 est une vue de détail agrandie de la surface intérieure de la douille, prise suivant la flèche F de la figure 2. Sur ces figures, il apparaît que la surface interne de la douille 3 est généralement cylindrique et présente une denture régulière, comme il apparaît plus clairement sur la figure 3. Cette denture 8 s'étend entre le fond de la douille et une gorge annulaire 9 située à proximité du débouché de cette douille.

L'embase ainsi conformée est prévue pour recevoir, par exemple, une tête 10 représentée aux figures 4 à 6 du dessin annexé. On voit sur la vue de face de la figure 4 que la tête 10 est constituée d'un support ou berceau en V 11 solidaire d'un téton ou pion 12 représenté en plus de détail à la figure 6. Sur la vue latérale de la figure 5, il apparaît que le support 11 comprend deux ailes 11′, 11˝ parallèles et raccordées d'une part, par une base 11′′′ et, d'autre part, par une entretoise 13 écartée de la base 11′′′ par un passage 14 dont on expliquera plus loin l'utilité.

La figure 6 montre des arêtes 15 de dents régulièrement distribuées sur la périphérie du téton 12. Ces dents s'étendent parallèlement à l'axe du téton depuis l'extrémité libre de celui-ci jusqu'à une nervure circulaire 16. Suivant la présente invention la denture et la nervure formées sur le téton 12 sont complémentaires de la denture 8 et de la gorge 9 formées dans la douille 3 de l'embase 1.

Ainsi peut-on assembler l'embase et la tête en poussant le téton de cette dernière dans la douille de l'embase, jusqu'à faire entrer à force la nervure 16 du téton dans la gorge 9 de la douille. Le téton est alors immobilisé on rotation et axialement sur l'embase. Un choix approprié de la matière constituant la tête et l'embase autorise un tel couplage à force. A titre d'exemple d'une telle matière on peut citer le polyamide 66 vendu sous le nom de ZYTEL 103 par la Société DU PONT DE NEMOURS.

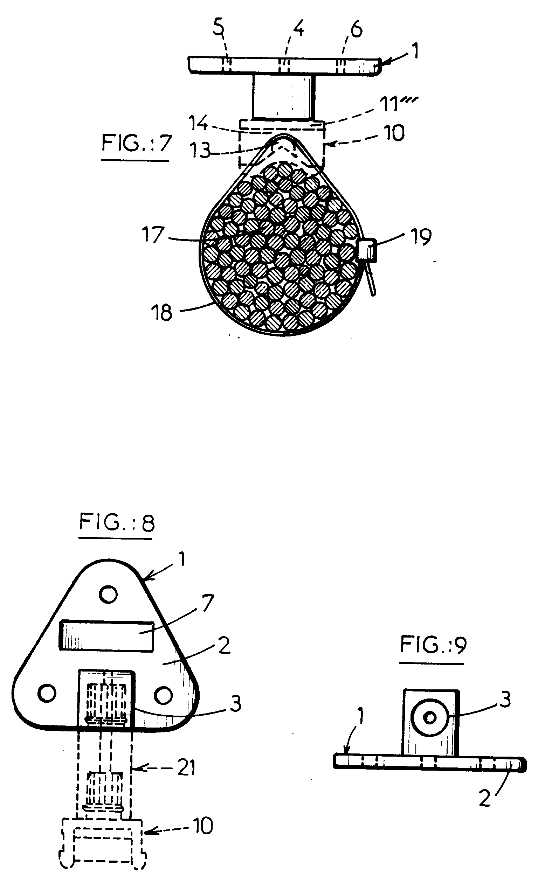

On se réfère maintenant à la figure 7 du dessin annexé pour expliquer le montage de l'ensemble de support suivant l'invention. Sur cette figure on a représenté, en vue de profil, l'embase 1 supposée fixée sur une surface de support ( non représentée ) grâce à des organes de fixation passant dans les trous 4, 5, 6. On a représenté en trait interrompu une tête 10 montée à force sur l'embase comme indiqué ci-dessus.

Avant l'assemblage, on peut faire couler un point de colle fluide dans la douille de l'embase. Celle-ci est alors avantageusement percée d'un trou 20 ( voir figures 1 et 2) dans son fond pour permettre l'expansion de l'excès de colle chassée par le téton, à l'extérieur de l'embase.

Enfin on a schématisé sur la figure 7 un faisceau 17 de câbles, électriques par exemple, fixé sur le support 11 au moyen d'un bracelet souple 18 muni d'un passant de blocage 19 de tout type connu. Le bracelet 18 passe dans le passage 14 ouvert entre la base 11′′′ et l'entretoise 13 (voir figure 5). On peut donc, en serrant le bracelet, presser le faisceau de câbles sur le siège en V défini par les ailes 11′, 11˝ du support 11, pour assurer la stabilité du faisceau sur la tête. Bien entendu, en variant l'ouverture du "V", on pourra adapter le support 11 à la réception de faisceaux de diamètre plus ou moins grand.

L'ensemble de support ainsi constitué présente plusieurs avantages. D'une part il permet d'orienter la tête autour de l'axe de la douille de l'embase, grâce aux dentures complémentaires de la douille 8 et du téton 12. Les dents complémentaires peuvent s'étendre chacune circulairement sur 30° par exemple. Avec de telles dents, la tête peut occuper douze positions différentes sur l'embase ce qui correspond, du fait de la symétrie de ces positions et de la tête 10, à six positions utiles distinctes. Une telle possibilité d'orientation est très précieuse en ce sens qu'on peut adapter la position de la tête à la direction suivie par un câble ou un faisceau de câbles courant parallèlement à une surface de support, parois ou cloisons de cellules d'aéronef par exemple. En outre, le positionnement angulaire de l'embase n'a plus besoin d'être fixé avec précision, ce qui facilite la fixation de l'embase sur la cloison de support.

D'autre part, et suivant une caractéristique essentielle de la présente invention, la séparation en deux composants de la tête et de l'embase introduit dans l'ensemble une modularité qui procure une grande souplesse d'adaptation à des situations dans lesquelles les positions des câbles à fixer par rapport aux cloisons de support sont très différentes. Cette modularité sera largement illustrée dans la suite de la présente description, en liaison avec les figures 8 à 15. En combinant différemment un petit nombre de pièces, on constitue un très grand nombre de supports différents, s'adaptant parfaitement à toutes les situations rencontrées, comme on le verra dans la suite.

En outre, l'assemblage d'un support par insertion à force d'une nervure 16 dans une rainure 9, permet une solidarisation rapide et commode de l'embase et de la tête, éventuellement démontable en cas de modification du câblage (si l'on n'a pas utilisé de colle évidemment).

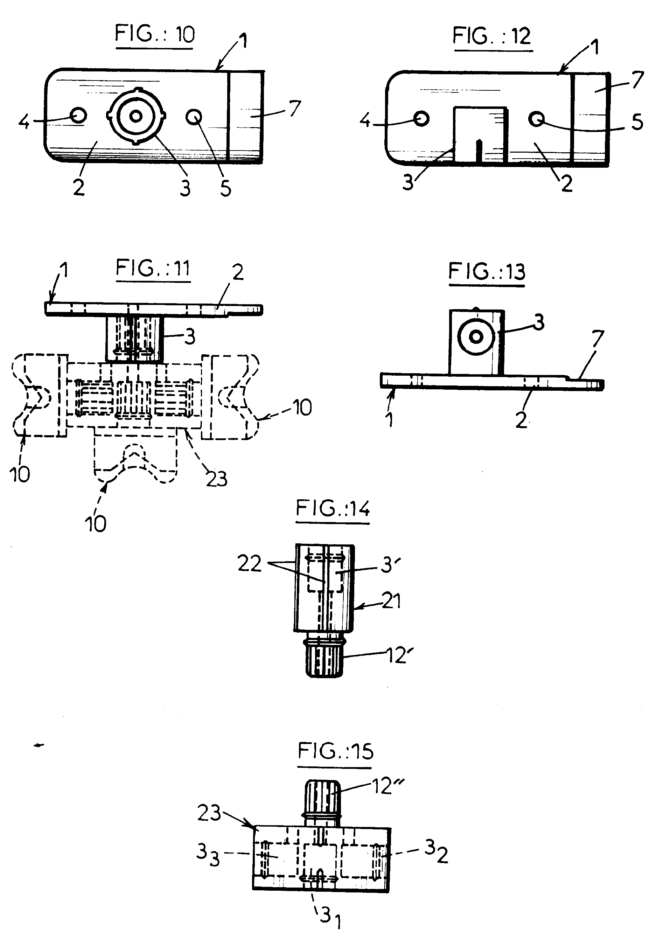

Les figures 8 à 13 représentent d'autres modes de réalisation de l'embase, susceptibles d'être incorporés à l'ensemble modulaire suivant l'invention. Sur ces figures, des références numériques identiques à celles utilisées aux figures 1 à 7 concernent des éléments ou organes identiques ou similaires. Ainsi, il apparaît sur la vue en élévation de la figure 8 et sur la vue de face de la figure 9, qui concernent une variante de l'embase de la figure 1, que cette variante ne se distingue de l'embase déjà décrite qu'en ce que l'axe de la douille 3 est parallèle à la base 2 de l'embase. L'embase représentée en élévation à la figure 10 et en vue de face à la figure 11, se distingue de celle de la figure 1 par son embase généralement rectangulaire et non triangulaire, percée de deux trous de fixation 4 et 5 seulement. Une telle embase convient lorsque la fixation de l'embase sur la cloison de support peut être allégée. Les figures 12 et 13 correspondent aux figures 10 et 11 et concernent une variante de l'embase représentée à ces figures, variante suivant laquelle la douille présente un axe parallèle à la base 2 de l'embase et non perpendiculaire à celle-ci.

La figure 14 représente une colonnette d'extension 21 qui comprend essentiellement, agencés en ligne sur un même axe, une douille 3′ et un téton 12′ complémentaires l'un de l'autre et conformes aux douilles 3 et au téton 12 des modes de réalisation précédents, respectivement.

Des nervures de repérage angulaire 22 peuvent être disposées régulièrement sur la périphérie de la colonnette, tout comme d'ailleurs sur la périphérie des douilles incorporées aux embases décrites précédemment.

La figure 15 représente un support multiple 23 ou croisillon, qui comprend un téton 12˝ conforme aux tétons 12 et 12′ des modes de réalisation précédents et, par exemple, trois douilles 3₁, 3₂, 3₃ conformes aux douilles 3 et 3′ des modes de réalisation précédents. La douille 3₁ est coaxiale et en ligne avec le téton 12˝ tandis que les douilles 3₂ et 3₃ sont disposées tête-bêche sur un même axe perpendiculaire à celui du téton 12˝ et de la douille 3₁.

Les embases, têtes, colonnettes, et croisillons décrits ci-dessus peuvent être combinés suivant une grande variété de configurations en vue d'une adaptation à des conditions de support de câbles différentes. Cette faculté est essentielle notamment dans un aéronef ou courent de très grandes longueurs de câbles électriques nécessaires à l'alimentation et/ou à l'interconnexion de très nombreux organes ou appareils. La topologie des passages de câbles doit alors être soigneusement étudiée et il est nécessaire de disposer de moyens de fixation de ces câbles dans les passages choisis, qui soient susceptibles de s'adapter à des conditions d'encombrement complexes. Dans la technique antérieure on a multiplié à cet effet les types de support disponibles, au détriment des coûts de fabrication et de stockage de ces supports. L'ensemble modulaire suivant l'invention permet de disposer, par des combinaisons variées d'un petit nombre d'éléments, d'un jeu étendu de tels supports, de coût de fabrication et de stockage réduits.

On a représenté aux figures 8 et 11, deux assemblages que l'on peut réaliser avec les composants décrits ci-dessus, à titre d'exemple seulement, car les assemblages possibles sont très nombreux du fait que l'ensemble suivant l'invention permet de supporter des câbles ou faisceaux de câbles, suivant n'importe quelle direction de l'espace, parallèles ou perpendiculaires à l'axe d'un des couples douille/téton utilisé dans un ensemble de support suivant l'invention. A la figure 8, on a monté une colonnette 21 sur l'embase représentée et une tête 10 sur la colonnette 21. Bien entendu plusieurs colonnettes pourraient être enfilées bout à bout pour faire varier la distance séparant la tête de la douille de l'embase. La tête elle-même pourrait être installée dans toutes les positions angulaires autres que celle représentée. A la figure 11, l'embase reçoit un croisillon 23, lui-même équipé de trois têtes 10. On peut ainsi multiplier le nombre de faisceaux de câbles supportés par une même embase. Là encore une ou plusieurs colonnettes d'extension pourraient être interposées entre le croisillon et l'embase. De même, d'autres croisillons pourraient être interposés entre les têtes et l'embase représentées à la figure 11.

Outre la souplesse d'adaptation et les gains financiers déjà mentionnés, obtenus par l'utilisation de l'ensemble modulaire suivant l'invention, celui-ci permet aussi de diminuer le poids total des supports de câble utilisés, avantage supplémentaire particulièrement apprécié dans un aéronef.

Bien entendu l'invention n'est pas limitée aux modes de réalisation représentés qui n'ont été donnés qu'à titre d'exemple. Ainsi on pourrait réaliser des embases à plusieurs douilles susceptibles de recevoir plusieurs têtes, ou des têtes à plusieurs tétons permettant des assemblages de têtes dans des positions différentes. En outre douilles et tétons pourraient être intervertis sur les embases, têtes, et autres pièces décrites ci-dessus.

## Revendications

1. Ensemble modulaire de support de câbles électriques comprenant au moins deux éléments constituant respectivement une embase (1) prévue pour être fixée sur une surface de support et une tête (10) conformée pour recevoir les câbles, un téton (12) solidaire d'un élément étant conformé pour être reçu dans une douille (3) solidaire de l'autre élément de manière à assurer l'assemblage des deux éléments, ensemble caractérisé en ce que le téton (12) présente successivement, à partir de sa racine, une nervure annulaire (16) et une surface latérale dentée (15) coaxiales et en ce que la douille (3) présente successivement à partir de son débouché, une gorge (9) annulaire et une surface latérale interne dentée (8) coaxiales et conformées complémentairement à la nervure (16) et à la surface latérale (15) du téton pour permettre l'insertion du téton (12) dans la douille (3) suivant une orientation angulaire relative choisie parmi celles définies par les surfaces dentées coopérantes, et l'insertion à force de la nervure (16) dans la gorge (9) pour bloquer axialement le téton dans la douille.

2. Ensemble conforme à la revendication 1, caractérisé en ce que, en position d'assemblage, l'axe du téton (12) et de la douille (3) dans laquelle ce téton est inséré est perpendiculaire à une base (2) d'appui de l'embase (1).

3. Ensemble conforme à la revendication 1, caractérisé en ce que, en position d'assemblage, l'axe du téton (12) et de la douille (3) dans laquelle ce téton est inséré est parallèle à une base (2) d'appui de l'embase (1).

4. Ensemble conforme à l'une quelconque des revendications 1 à 3, caractérisé en ce qu'il comprend un élément (21 ; 23) comprenant au moins un téton (12′, 12˝) et au moins une douille (3′ ; 3₁, 3₂, 3₃) complémentaire du téton.

5. Ensemble conforme à la revendication 4, caractérisé en ce que l'élément prend la forme d'une colonnette d'extension (21) munie d'un téton (12′) à une extrémité et d'une douille (3′) à l'extrémité opposée, de manière à pouvoir être insérée entre une embase (1) et une tête (10).

6. Ensemble conforme à la revendication 4, caractérisé en ce que l'élément prend la forme d'un croisillon (23) comprenant un téton (12˝) et plusieurs douilles (3₁, 3₂, 3₃) propre à recevoir chacune le téton d'un autre élément.

7. Ensemble conforme à l'une quelconque des revendications 1 à 6, caractérisé en ce que l'élément (10) en forme de tête prend la forme d'un siège pour un ou plusieurs câbles et comprend un passage (14) pour recevoir un bracelet (18) de fixation de câble(s) sur la tête.

8. Ensemble conforme à l'une quelconque des revendications 1 à 7, caractérisé en ce que l'élément formant embase (1) comprend une plage (7) propre à recevoir une inscription.

9. Ensemble conforme à l'une quelconque des revendications 1 à 8, caractérisé en ce que l'un au moins du téton et d'une douille à assembler est percé d'un trou (20) d'expansion pour une goutte de colle coulée dans la douille avant l'assemblage.

## Patentansprüche

1. Modularer Zusammenbau zum Tragen von elektrischen Kabeln mit zumindest zwei Elementen, die jeweils einen Sockel (1), der vorgesehen ist, um auf einer Tragoberfläche befestigt zu werden und einen Kopf (10), der gestaltet ist, um Kabel aufzunehmen, bilden, wobei ein mit einem Element verbundener Ansatz (12) gestaltet ist, um in einer mit einem anderen Element verbundenen Buchse (3) aufgenommen zu werden, so dass sie die Zusammenbau der beiden Elemente sicherstellen, wobei der Zusammenbau dadurch gekennzeichnet ist, daß der Ansatz (12) nacheinander ausgehend von seiner Wurzel koaxial eine ringförmige Rippe (16) und eine seitliche gezahnte Oberfläche (15) aufweist und daß die Buchse (3) nacheinander ausgehend von ihrer Öffnung eine ringförmige Nut (9) und eine seitliche innere gezahnte Oberfläche (8) aufweist, die koaxial und komplementär zu der Rippe (16) und zu der seitlichen Oberfläche (15) des Ansatzes gestaltet sind, um das Einsetzen des Ansatzes (12) in die Buchse (3) folgend einer relativen winkligen Ausrichtung gewählt unter den durch die gezahnten zusammenwirkenden definierten Oberflächen zu erlauben, und das Einsetzen mittels Kraft der Rippe (16) in die Nut, um den Ansatz axial in der Buchse zu blockieren.

2. Zusammenbau gemäß Anspruch 1, dadurch gekennzeichnet, daß in Zusammenbaulage die Achse des Ansatzes (12) und der Buchse (3), in die der Ansatz eingesetzt ist, senkrecht zu einer Basis (2) für Anlage des Sockels (1) ist.

3. Zusammenbau gemäß Anspruch 1, dadurch gekennzeichnet, daß in Zusammenbauposition die Achse des Ansatzes (12) und der Buchse (3), in die der Ansatz eingesetzt ist, parallel zu einer Basis (2) für Anlage des Sockels (1) ist.

4. Zusammenbau gemäß irgendeinem der Ansprüche 1 bis 3, dadurch gekennzeichnet, daß er ein Element (21; 23) aufweist, welches zumindest einen Ansatz (12′, 12˝) und zumindest eine Buchse (3′; 3₁, 3₂, 3₃) komplementär zum Ansatz aufweist.

5. Zusammenbau gemäß Anspruch 4, dadurch gekennzeichnet, daß das Element die Form einer Distanzsäule (21) hat, die an einem Ende mit einem Ansatz (12′) versehen ist und mit einer Buchse (3′) am gegenüberliegenden Ende, auf eine Weise, zwischen einen Sockel (1) und einen Kopf (10) gesetzt werden zu können.

6. Zusammenbau gemäß Anspruch 4, dadurch gekennzeichnet, daß das Element die Form eines Kreuzstückes (23) hat, das einen Ansatz (12˝) und mehrere Buchsen (3₁, 3₂, 3₃) aufweist, die geeignet sind, um jede den Ansatz eines anderen Elements aufzunehmen.

7. Zusammenbau gemäß irgendeinem der Ansprüche 1 bis 6, dadurch gekennzeichnet, daß das Element (10) in Form eines Kopfes die Form eines Sitzes für ein oder mehrere Kabel annimmt und einen Durchgang (14) zum Aufnehmen einen Bandes (18) zur Befestigung des (der) Kabels (Kabel) auf dem Kopf aufweist.

8. Zusammenbau gemäß irgendeinem der Ansprüche 1 bis 7, dadurch gekennzeichnet, daß das den Sockel (1) bildende Element eine Fläche (7) aufweist, die geeignet ist, eine Aufschrift zu tragen.

9. Zusammenbau gemäß irgendeinem der Ansprüche 1 bis 8, dadurch gekennzeichnet, daß zumindest eines der zusammenzubauenden Teile Ansatz und Buchse von einem Ausdehnungsloch (20) für einen Tropfen Klebstoff, der vor dem Zusammenbau in die Buchse eingebracht ist, durchbohrt ist.

## Claims

1. Modular assembly for supporting electrical cables which comprises at least two elements respectively forming a mounting (1) intended to be fastened to a supporting surface and a head (10) shaped for receiving the cables, a stud (12) fixed to one element being shaped to be received in a bush (3) fixed to the other element, so as to ensure that the two elements are joined together, the said assembly being characterized in that the stud (12) possesses in succession, starting from its root, an annular rib (16) and a toothed lateral surface (15) which are coaxial, and in that the bush (3) possesses in succession, starting from its mouth, an annular groove (9) and a toothed inner lateral surface (8) which are coaxial and which are shaped to complement the rib (16) and the lateral surface (15) of the stud, to make it possible to insert the stud (12) into the bush (3) according to a relative angular orientation selected from those defined by the interacting toothed surfaces and to insert the rib (16) forcibly into the groove (9) so as to block the stud axially in the bush.

2. Assembly according to Claim 1, characterized in that, in the joined together position, the axis of the stud (12) and of the bush (3), in which this stud is inserted, is perpendicular to a bearing base (2) of the mounting (1).

3. Assembly according to Claim 1, characterized in that, in the joined together position, the axis of the stud (12) and of the bush (3), in which this stud is inserted, is parallel to a bearing base (2) of the mounting (1).

4. Assembly according to any one of Claims 1 to 3, characterized in that it possesses an element (21 ; 23) comprising at least one stud (12′, 12˝) and at least one bush (3′ ; 3₁, 3₂, 3₃) complementary with the stud.

5. Assembly according to Claim 4, characterized in that the element takes the form of an extension column (21) equipped with a stud (12′) at one end and with a bush (3′) at the opposite end, so as to be insertable between a mounting (1) and a head (10).

6. Assembly according to Claim 4, characterised in that the element takes the form of a crossmember (23) comprising a stud (12˝) and a plurality of bushes (3₁, 3₂, 3₃) each suitable for receiving the stud of another element.

7. Assembly according to any one of Claims 1 to 6, characterised in that the head-shaped element (10) takes the form of a seat for one or more cables and has a passage (14) for receiving a strap (18) for fastening a cable or cables to the head.

8. Assembly according to any one of Claims 1 to 7, characterised in that the element forming a mounting (1) has a zone (7) suitable for receiving an inscription.

9. Assembly according to any one of Claims 1 to 8, characterised in that one at least of the stud and of a bush to be joined together is pierced with an expansion hole (20) for a drop of adhesive poured into the bush before the joining together.
